# EUROPÄISCHE PATENTSCHRIFT

(11) **EP 1 393 847 B1**
(45) Veröffentlichungstag und Bekanntmachung des Hinweises auf die Patenterteilung: **21.03.2012**
(21) Anmeldenummer: 02019412.2
(22) Anmeldetag: 30.08.2002
(51) Int. Cl.: B23K 26/00, B23K 3/08, B23K 7/00, B23K 15/08, B23K 26/42, B26D 7/01, B26D 7/20

(54) **Werkstücksauflage einer Maschine zum thermischen Schneiden von Werkstücken und Verfahren zu deren Herstellung**
Workpiece support for a thermal cutting apparatus and method for manufacturing the workpiece support
Support d'une tôle pour une machine à couper thermique et méthode pour la fabrication du support

(43) Veröffentlichungstag der Anmeldung: 03.03.2004
(73) Patentinhaber: TRUMPF Werkzeugmaschinen GmbH + Co. KG, 71254 Ditzingen (DE)
(72) Erfinder: Klingel, Hans, Dr., 71696 Möglingen (DE)
(74) Vertreter: Kohler Schmid Möbus

(56) Entgegenhaltungen:
- EP-A- 1 208 935
- GB-A- 1 301 611
- JP-A- 6 142 970
- US-A- 2 890 883
- US-A- 3 228 103
- US-A- 4 185 185
- PATENT ABSTRACTS OF JAPAN vol. 005, no. 203 (M-103), 23. Dezember 1981 (1981-12-23) & JP 56 119684 A (JAPAN STEEL WORKS LTD:THE), 19. September 1981 (1981-09-19)
- PATENT ABSTRACTS OF JAPAN vol. 2000, no. 07, 29. September 2000 (2000-09-29) & JP 2000 117461 A (SUMITOMO METAL IND LTD), 25. April 2000 (2000-04-25)
- PATENT ABSTRACTS OF JAPAN vol. 1999, no. 01, 29. Januar 1999 (1999-01-29) & JP 10 277755 A (MITSUBISHI HEAVY IND LTD), 20. Oktober 1998 (1998-10-20)
- PATENT ABSTRACTS OF JAPAN vol. 004, no. 111 (M-025), 9. August 1980 (1980-08-09) & JP 55 070424 A (NAKANO AKIO), 27. Mai 1980 (1980-05-27)
- PATENT ABSTRACTS OF JAPAN vol. 014, no. 087 (M-0937), 19. Februar 1990 (1990-02-19) & JP 01 299761 A (FUJI KOGYOSHO:KK), 4. Dezember 1989 (1989-12-04)

## Beschreibung

Die Erfindung betrifft eine Werkstückauflage einer Maschine zum thermischen Schneiden von Werkstücken und ein Verfahren zu deren Herstellung.

Zur Bearbeitung wird ein Werkstück auf einer Werkstückauflage der Maschine angeordnet. Die Werkstückauflage sollte bei thermischer und mechanischer Belastung möglichst formstabil sein.

Beim thermischen Schneiden tritt zum einen das Problem auf, dass neben Teilen des Werkstücks auch Teile der Werkstückauflage erwärmt werden. Die Erwärmung führt zu einer thermischen Expansion der Werkstückauflage. Die thermische Expansion ist materialabhängig und lässt sich durch den thermischen Ausdehnungskoeffizienten α beschreiben. Die Werkstückauflage sollte daher aus einem Material bestehen, welches einen niedrigen thermischen Ausdehnungskoeffizienten α besitzt.

Durch die Auflage des Werkstücks auf der Werkstückauflage kommt es zu dem weiteren Problem, dass unterschiedliche Materialien miteinander in Kontakt kommen. Partikel des Werkstücks lagern sich auf der Werkstückauflage an. Je nach Material des Werkstücks und der Werkstückauflage bzw. deren Elektronegativität entstehen in Abhängigkeit von den Umgebungsbedingungen wie Luftfeuchtigkeit und Sauerstoffgehalt galvanische Zellen, welche mit der Zeit zu einer lokalen Korrosion der Werkstückauflage führen.

Es ist leicht verständlich, dass diese Vorgänge nachteilige Auswirkungen auf die Bearbeitung des Werkstücks haben.

Beispielsweise sind Auflagenbereiche aus Edelstahl bei der Bearbeitung von Edelstahlblechen zur Vermeidung einer Korrosion der Werkstückauflage erforderlich. Auf Grund eines hohen thermischen Ausdehnungskoeffizienten wäre aber eine Werkstückauflage aus Edelstahl bei Erwärmung nicht ausreichend formstabil.

Die JP 56119684 A, die US 3,228,103 und die US 4,185,185 beschäftigen sich mit dem Walzen von Stahl, insbesondere mit dem Verbinden von zwei unterschiedlichen Stahlmaterialien.

Aus der EP 1 208 935 A1 ist eine Werkstückauflage mit Auflageleisten bekannt. Es sind Nadeln vorgesehen, die aus einem anderen Material ausgebildet sind als der Grundkörper der Werkstückauflage. Der Grundkörper und der Auflagebereich stellen keinen Materialverbund dar. Aus der JP 06142970 ist eine Werkstückauflage aus mehreren Auflageleisten bekannt. Die Auflageleisten weisen auf ihrer Auflagefläche eine Struktur auf.

Der Erfindung liegt die Aufgabe zugrunde, eine Werkstückauflage sowie ein Verfahren zu Herstellung der Werkstückauflage zu entwickeln, welche eine Formstabilität bei thermischer Belastung und eine möglichst geringe Neigung zur Korrosion bei Kontakt mit Werkstückpartikeln aufweist.

Diese Aufgabe wird durch eine Werkstückauflage gemäß Patentanspruch 1 gelöst, welche einen Grundkörper aus einem Material mit einem niedrigen thermischen Ausdehnungskoeffizienten α, d.h. aus einem bei thermischer Belastung verzugsarmen Material, und einen dem Werkstück zugeordneten Auflagebereich aus einem auf die Bearbeitung des Werkstücks abgestimmten Material aufweist.

Für unterschiedliche Bearbeitungen wird in Abhängigkeit des Materials des Werkstücks das Material der Werkstückauflage ausgewählt, während das Material des Grundkörpers nicht verändert werden muss und beibehalten werden kann. Der Grundkörper besteht aus thermischen und mechanischen Formstabilitätsgründen aus Baustahl mit einem thermischen Ausdehnungskoeffizienten α in der Größenordnung von 12*10⁻⁶/ K.

Der Auflagebereich besteht aus Edelstahl mit einem thermischen Ausdehnungskoeffizienten αin der Größenordnung von 17 * 10⁻⁶ / K bestehen, so dass auf Auflagebereichen aus Edelstahl aufliegende Edelstahlbleche problemlos bearbeitet werden können.

Der Auflagebereich soll vorzugsweise aus demselben Material bestehen wie das Material des zu bearbeitenden Werkstücks. Folglich können Ablagerungen von Werkstückpartikeln nicht zu einer Korrosion führen.

Der Kontaktbereich zwischen Werkstück und Werkstückauflage verringert sich, wenn der Auflagebereich durch rippenartige Vorsprünge ausgebildet ist.

In den Rahmen der Erfindung fällt außerdem ein Verfahren mit den Merkmalen des Anspruchs 3.

Das erfindungsgemäße Herstellungsverfahren ist durch eine Verbindung zweier übereinander angeordneter Metallstreifen zu einem Metallverbundstreifen und eine Ablängung des Metallverbundstreifens gekennzeichnet, wobei der eine Metallstreifen zur Ausbildung eines Grundkörpers der Werkstückauflage und der andere Metallstreifen zur Ausbildung eines Auflagenbereichs der Werkstückauflage vorgesehen ist. Durch die Verbindung der Metallstreifen entsteht eine Auflagenleiste, welche in eine entsprechende Halterung der Maschine zur thermischen Bearbeitung eingesteckt, eingehängt oder auf andere Weise befestigt werden kann. Der Grundkörper besteht aus Baustahl mit einem thermischen Ausdehnungskoeffizienten α in der Größenordnung von 12 x 10⁻⁶ / K und der Auflagebereich besteht aus Edelstahl mit einem thermischen Ausdehnungskoeffizienten α in der Größenordnung von 17 x 10⁻⁶ / K

Eine kompakte Anlage zur Herstellung der Werkstückauflage soll im wesentlichen eine Zuführungseinrichtung für zwei Metallstreifen, eine Verbindungseinrichtung zur Verbindung der Metallstreifen zu einem Metallverbundstreifen und eine Ablängeinrichtung des Metallverbundstreifens aufweisen.

Zwei bevorzugte Ausführungsbeispiele der Erfindung sind in der Zeichnung schematisch dargestellt und werden nachfolgend mit Bezug zu den Figuren der Zeichnung näher erläutert. Es zeigt:
- **Fig. 1**: einen schematischen Verfahrensablauf einer ersten Herstellung einer Auflageleiste einer Werkstückauflage einer Laserschneidmaschine;
- **Fig. 2**: einen schematischen Verfahrensablauf einer zweiten Herstellung einer Auflageleiste einer Werkstückauflage einer Laserschneidmaschine;

Ein Werkstück, beispielsweise ein Blech, wird in der Regel auf eine Werkstückauflage aufgebracht, welche durch mehrere Auflageleisten ausgebildet ist. Das Werkstück liegt während der Bearbeitung auf den Auflageleisten auf. Eine solche Werkstückauflage ist an sich aus der DE 199 43 043 A1 bekannt und wird infolgedessen hier nicht näher beschrieben.

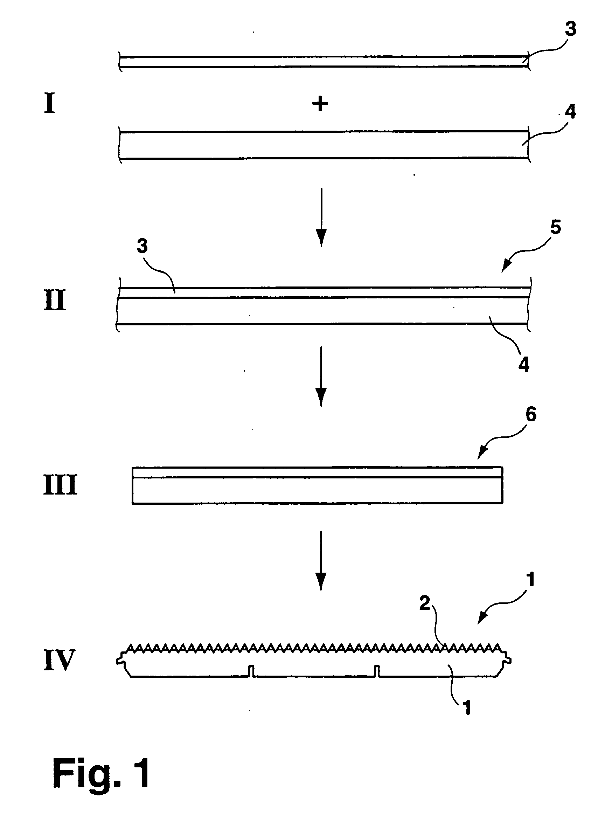

Zur Herstellung einer Auflageleiste **1** mit rippenartigen Vorsprüngen 2, auf denen das Werkstück später während der Bearbeitung aufliegt, werden gemäß **Fig. 1** zwei endlose Metallstreifen **3** und **4** in einem ersten **Verfahrensschritt** 1 von einer nicht gezeigten Vorratsrolle abgewickelt. Der Metallstreifen 3 besteht aus Edelstahl, während der Metallstreifen 4 aus Baustahl mit einem gegenüber Edelstahl niedrigen thermischen Ausdehnungskoeffizienten α besteht. Anschließend werden die beiden Metallstreifen flächenhaft, deckungsgleich übereinander angeordnet und miteinander in einem zweiten **Verfahrensschritt II** stumpf verschweißt, so dass sich ein aus zwei verschiedenen Metallen aufgebauter Metallverbundstreifen **5** ergibt. Der Metallverbundstreifen 5 besteht aus einem oberen Teilstreifen aus dem ersten Metall und einem unteren Teilstreifen aus dem zweiten Metall. Ein dritter **Verfahrenschritt III** ist gekennzeichnet durch die Ablängung des Metallverbundstreifens 5 in auf die Erstreckung der Auflageleiste 1 abgestimmte Metallverbundstreifenstücke **6**. Zur Herstellung der fertigen Auflageleiste 1 werden die rippeartigen Vorsprünge 2 in einem vierten **Verfahrenschritt IV** durch Schneiden oder Freistanzen aus den Metallverbundstreifenstücken 6 ausgebildet. Durch die Wahl der Metallstreifen 3 und 4 aus Edelstahl bzw. Baustahl weist die Auflageleiste 1 einen Grundkörper aus Baustahl mit Vorsprüngen 2 aus Edelstahl auf.

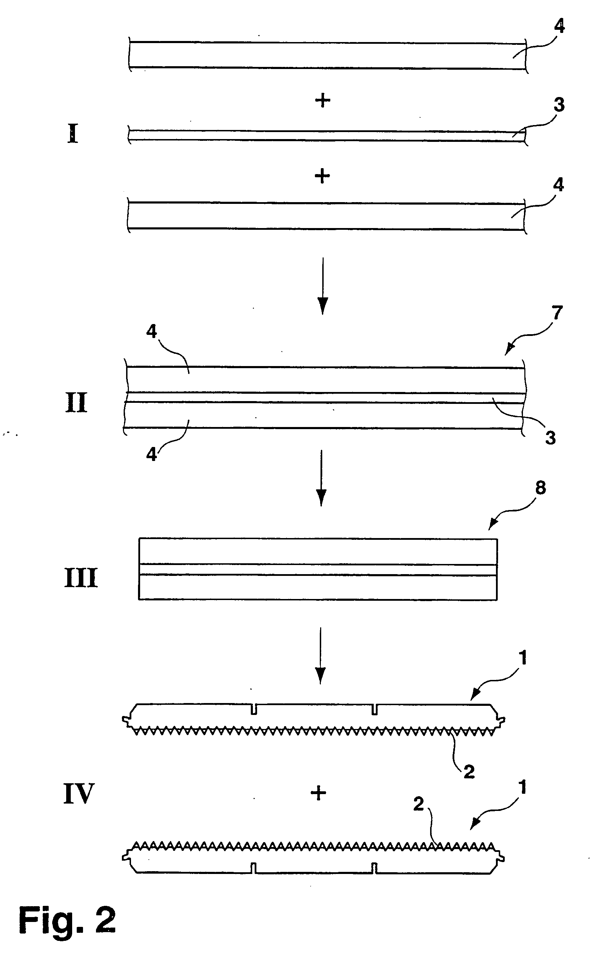

Alternativ ist die Herstellung einer Auflageleiste 1 gemäß **Fig. 2** unter Verwendung von drei bevorrateten, endlosen Metallstreifen 3 und 4 möglich. Zwei Metallstreifen 4 und ein Metallstreifen 3 werden wiederum in einem ersten **Verfahrensschritt I** von nicht gezeigten Vorratsrollen abgewickelt und zusammengeführt. Die einzelnen Metallstreifen werden miteinander verschweißt, so dass nach **Verfahrensschritt II** ein aus drei übereinander angeordneten Metalllagen zusammengesetzter Metallverbundstreifen **7** vorliegt. Dieser Metallverbundstreifen wird in **Verfahrensschritt III** beispielsweise mit Hilfe einer durch eine Querteilschere ausgebildeten bekannten Trenneinrichtung in Metallverbundstreifenstücke **8** abgelängt. Die dreilagigen Metallverbundstreifenstücke 8 werden durch ein Austanzen oder Schneiden der Vorsprünge 2 im Bereich der mittleren Metalllage in zwei identische Auflageleisten 1 getrennt. Es entstehen in einem gemeinsamen Herstellungsprozess zwei Auflageleisten 1 mit einem Grundkörper aus Baustahl und mit Vorsprüngen 2 aus Edelstahl.

### BEZUGSZEICHENLISTE

- 1: Auflageleiste
- 2: Vorsprung
- 3: Metallstreifen
- 4: Metallstreifen
- 5: Metallverbundstreifen
- 6: Metallverbundstreifenstück
- 7: Metallverbundstreifen
- 8: Metallverbundstreifenstück

## Patentansprüche

1. Werkstückauflage (1), die durch mehrere Auflageleisten ausgebildet ist, **dadurch gekennzeichnet, dass** die Auflageleisten jeweils einen Grundkörper und einen mit dem Grundkörper verbundenen Auflagebereich umfassen, wobei der Grundkörper und der Auflagebereich einen Materialverbund darstellen und der Grundkörper einen thermischen Ausdehnungskoeffizienten in der Größenordnung von 12 x 10⁻⁶ / K und der Auflagebereich einen thermischen Ausdehnungskoeffizienten in der Größenordnung von 17 x 10⁻⁶ / K aufweisen, wobei der Grundkörper aus Baustahl und der Auflagebereich aus Edelstahl besteht.

2. Werkstückauflage nach Anspruch 1, **dadurch gekennzeichnet, dass** der Auflagebereich durch rippenartige Vorsprünge (2) ausgebildet ist.

3. Verfahren zur Herstellung einer Werkstückauflage (1) aus mehreren Auflagelisten, **gekennzeichnet durch** die Herstellung mehrerer Auflageleisten **durch** eine Verbindung zweier übereinander angeordneter Metallstreifen (3, 4) zu einem Metallverbundstreifen (5; 7) und eine Ablängung des Metallverbundstreifens (5; 7), wobei der eine Metallstreifen (3) aus Baustahl mit einem thermischen Ausdehnungskoeffizienten in der Größenordnung von 12 x 10⁻⁶ / K und der andere Metallstreifen (4) aus Edelstahl mit einem thermischen Ausdehnungskoeffizienten in der Größenordnung von 17 x 10⁻⁶ / K besteht.

4. Verfahren nach Anspruch 3, **dadurch gekennzeichnet; dass** drei Metallstreifen (3, 4) zu einem Metallverbundstreifen (5; 7) verbunden werden.

5. Verfahren nach einem der Ansprüche 3 oder 4, **gekennzeichnet durch** ein Ausstanzen oder Ausschneiden von Vorsprüngen (2) des Auflagenbereichs.

## Claims

1. Workpiece support (1) formed by several support slats, **characterised in that** each of the support slats comprises a base body and a support region connected to the base body, the base body and the support region constituting a composite material and the base body having a thermal expansion coefficient in the order of magnitude of 12 x 10⁻⁶ / K and the support region having a thermal expansion coefficient in the order of magnitude of 17 x 10⁻⁶ / K, the base body being composed of structural steel and the support region being composed of stainless steel.

2. Workpiece support according to claim 1, **characterised in that** the support region is formed by rib-like projections (2).

3. Method for the manufacture of a workpiece support (1) from several support slats, **characterised by** the manufacture of several support slats by connecting two metal strips (3, 4), which are arranged one above the other, to form a composite metal strip (5; 7) and cutting to length the composite metal strip (5; 7), the one metal strip (3) being composed of structural steel having a thermal expansion coefficient in the order of magnitude of 12 x 10⁻⁶ / K and the other metal strip (4) being composed of stainless steel having a thermal expansion coefficient in the order of magnitude of 17 x 10⁻⁶ / K.

4. Method according to claim 3, **characterised in that** three metal strips (3, 4) are connected to form a composite metal strip (5; 7).

5. Method according to either claim 3 or claim 4, **characterised by** punching out or cutting out projections (2) of the support region.

## Revendications

1. Support de pièce (1), qui est formé par plusieurs barres de support, **caractérisé en ce que** les barres de support comprennent chacune un corps de base et une région de support assemblée au corps de base, sachant que le corps de base et la région de support constituent un matériau composite, que le corps de base présente un coefficient de dilatation thermique de l'ordre de 12 x 10⁻⁶ / K et la région de support un coefficient de dilatation thermique de l'ordre de 17 x 10⁻⁶ / K, sachant que le corps de base est constitué d'acier de construction et la région de support d'acier spécial.

2. Support de pièce selon la revendication 1, **caractérisé en ce que** la région de support est formée par des saillies (2) du genre nervures.

3. Procédé de fabrication d'un support de pièces (1) à partir de plusieurs barres de support, **caractérisé par** la fabrication de plusieurs barres de support en assemblant deux bandes de métal (3, 4) disposées l'une au-dessus de l'autre pour former une bande de métal composite (5 ; 7) et en coupant à longueur la bande de métal composite (5 ; 7), sachant que l'une (3) des bandes de métal est constituée d'acier de construction présentant un coefficient de dilatation thermique de l'ordre de 12 x 10⁻⁶ / K, et que l'autre bande de métal (4) est constituée d'acier spécial présentant un coefficient de dilatation thermique de l'ordre de 17 x 10⁻⁶ / K.

4. Procédé selon la revendication 3, **caractérisé en ce que** trois bandes de métal (3, 4) sont assemblées pour former une bande de métal composite (5 ; 7).

5. Procédé selon la revendication 3 ou 4, **caractérisé par** la réalisation par découpage ou dentelage de saillies (2) dans la région de support.
